# EUROPEAN PATENT APPLICATION

(11) **EP 0 802 670 A1**
(43) Date of publication of application: **22.10.1997**
(21) Application number: 97200446.9
(22) Date of filing: 15.02.1997
(51) Int. Cl.: H04N 5/225, H04N 5/907

(54) **An apparatus for viewing details of images captured with a digital camera**

(30) Priority: 17.04.1996 US 15753; 16.05.1996 US 649846
(71) Applicant: Bayer Corporation, Pittsburgh, PA 15219-2502 (US)
(72) Inventor: Omvik, John F., North Andover, MA 01845 (US)
(74) Representative: Ramon, Charles Lucien

(57) **Abstract**

An apparatus for facilitating the use of a digital camera (30) incorporating a built-in display (22). A plurality of toggle switches (52, 54, 56) disposed adjacent to the built-in display allow an operator of the digital camera to zoom in, and pan through, the displayed digital image to adjust the viewing resolution of the image.

## Description

The present invention relates in general to digital cameras. More specifically, the present invention provides an apparatus for zooming in/out and panning through a digital image captured with a digital camera.

Currently, it is virtually impossible to accurately judge the quality of a digital image captured in the field using a portable digital camera (i.e., a digital camera not directly tethered to a computer workstation). In an attempt to overcome this problem, at least one manufacturer of digital cameras has incorporated a small, built-in color liquid crystal display into the back of a digital camera. The liquid crystal display operates as a viewfinder and/or image viewer, allowing an operator to view an image to be photographed, and/or review a previously captured digital image, in its entirety. Unfortunately, the small size and limited resolution (e.g., 72 ppi) of this type of display drastically limits the image detail available to an operator of the digital camera. Essentially, the liquid crystal display provides the operator of the digital camera with a low resolution "thumbnail" representation of an image.

The present invention solves this problem by providing an operator of a digital camera with an apparatus for zooming in/out and panning through a captured digital image using a built-in color liquid crystal display. Advantageously, the operator is able to immediately view and examine the digital image at a resolution high enough to view all of the detail captured by the camera. This allows the operator to immediately judge in the field, without any extra computer equipment, whether the digital image captured by the digital camera is satisfactory or must be re-taken with different parameters. The advantages of the present invention are realized by the specific features according to claim 1. Preferred embodiments of the invention are set out in the dependent claims.

The features of the present invention will best be understood from a detailed description of the invention and a preferred embodiment thereof selected for the purposes of illustration and shown in the accompanying drawings in which:
FIG. 1 is a front perspective view of a prior art digital camera;
FIG. 2 is a rear perspective view of the prior art digital camera illustrated in FIG. 1, wherein the digital camera is tethered to a computer workstation;
FIG. 3 is a rear perspective view of a digital camera incorporating the zooming/panning apparatus of the present invention; and
FIGS. 4-6 illustrate the operation of the present invention.

The objects, features, and advantages of the present invention are illustrated in detail in the accompanying drawings, wherein like reference numerals refer to like elements throughout the drawings.

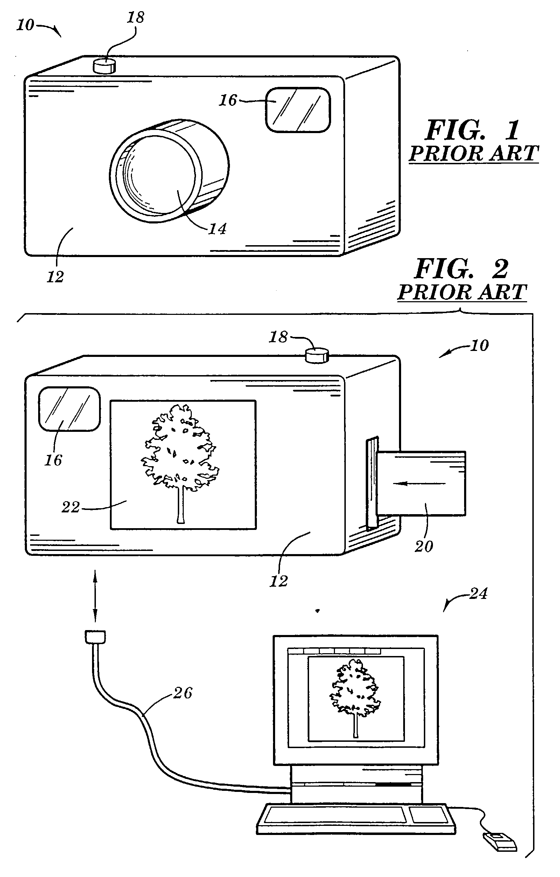

A conventional digital camera 10 is illustrated in FIGS. 1 and 2. As known in the art, the digital camera 10 generally includes a housing 12 enclosing the electronic, sensor, and computer components necessary for the acquisition of a digital image. The digital camera 10 further includes a focusing lens arrangement 14, a viewfinder 16, and a button 18 for initiating the capture of the image. A storage device 20, such as a PCMCIA removable storage card, is provided for the storage of a plurality of digital images captured using the digital camera 10. The camera 10 may additionally include a supply of random access memory (RAM) for the temporary storage of a captured digital image. Several examples of digital camera systems are provided in U.S. Patent Nos. 4,571,627 and 5,475,539, incorporated herein by reference.

A rear perspective view of the digital camera 10 is shown in FIG. 2. As shown, a liquid crystal display 22 (color or monochrome) is incorporated into the back of the housing 12. The liquid crystal display 22 allows an operator to view a low resolution representation of a captured digital image. This image may, depending on camera type, be the digital image most recently captured by the digital camera 10 and stored in RAM, or a previously captured digital image downloaded to the RAM from the storage device 20. Also, the liquid crystal display 22 can be used as a viewfinder to frame an image in lieu of, or in conjunction with, viewfinder 16.

Each captured digital image is stored in high resolution in the RAM and/or on the storage device 20. The high resolution digital images are immediately available for viewing, editing and/or processing if, at the time of image capture, the digital camera 10 is tethered to a computer workstation 24 by an appropriate cabling arrangement 26. In this case, the operator of the digital camera 10 can immediately examine the detail of a captured digital image and, if necessary, reshoot the image. When away from the computer workstation, however, the operator must rely on the low resolution image presented on the liquid crystal display 22 to judge the quality of a captured digital image.

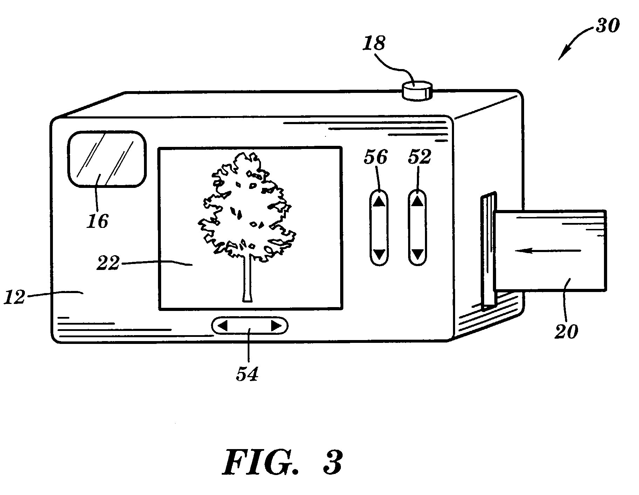

A rear view of a digital camera 30 in accordance with a preferred embodiment of the present invention is illustrated in FIG. 3. The digital camera 30 is basically similar in construction to the digital camera 10 shown in FIGS. 1 and 2. Initially, as with digital camera 10, a captured digital image is displayed in its entirety on the liquid crystal display 22. Unlike digital camera 10, however, the present invention further provides a unique apparatus for viewing the details of a captured digital image directly on the liquid crystal display 22.

The apparatus of the present invention includes a plurality of control mechanisms for zooming in/out and panning through a digital image displayed on the liquid crystal display 22. In the preferred embodiment of the present invention, the control mechanisms comprise a plurality of toggle switches disposed adjacent to the liquid crystal display 22. However, any suitable control mechanism can be used without departing from the scope of the present invention.

Referring again to FIG. 3, there are illustrated a plurality of toggle switches 52, 54, and 56, for manipulating the digital image displayed on the liquid crystal display 22. Zoom toggle switch 52 allows an operator of the digital camera 30 to zoom into, or out of, the digital image displayed on the display 22, to increase or reduce, respectively, visible image detail. Panning toggle switches 54 and 56 are used to pan left and right, and up and down, respectively, through a displayed digital image. As shown, toggle switch 54 (left/right) is strategically positioned parallel to the horizontal axis of the displayed digital image. As such, an operator can pan toward the left or right side of an digital image enlarged using the zoom toggle switch 52 by pressing the left or right side, respectively, of toggle switch 54. Analogously, toggle switch 56 (up/down) is positioned parallel to the vertical axis of the displayed digital image. Such positioning greatly increases the simplicity and ease of use of the panning toggle switches 54 and 56.

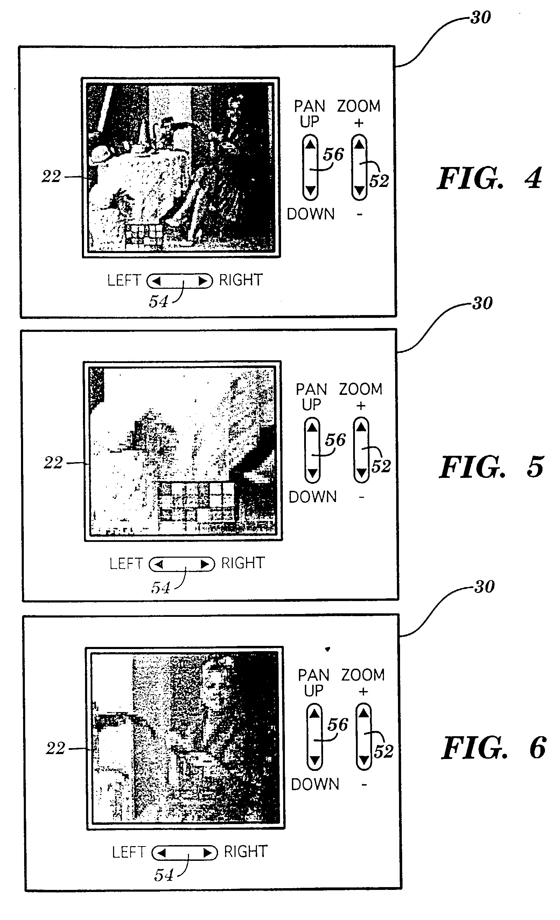

The use of the present invention is illustrated in detail in FIGS. 4, 5 and 6. In FIG. 4, a digital image captured by the digital camera 30 is displayed in its entirety on the liquid crystal display 22. Due to the small size of the liquid crystal display 22, the operator of the digital camera 30 is provided with limited image detail. To increase the viewing resolution (and visible detail) of the displayed image, an operator depresses the upper (+) section of the zoom toggle switch 52. As a result, an enlarged section of the digital image is displayed on the liquid crystal display 22. This is illustrated in FIG. 5. If the enlarged section of the digital image displayed on the liquid crystal display 22 does not contain Image detail of interest, the operator can pan through the enlarged image using panning toggle switches 54 and 56. In FIG. 6, for example, the operator has panned upward and to the right through the enlarged digital image using panning toggle switches 54 and 56 until the upper torso and head of the model is visible on the liquid crystal display 22.

## Claims

1. A digital camera system comprising:
a digital camera for converting an image into digital image data;
a housing for said digital camera;
a display, attached to a rear of said housing, for displaying said digital image data, said display having a top, a bottom, a first side, and a second side;
zoom means, attached to the rear of said housing adjacent said display, for adjusting a magnification of the digital image data displayed on said display, said zoom means including a zoom switch assembly having a first portion and a second portion, wherein the magnification of the digital image data displayed on said display is increased in response to an actuation of the first portion of said zoom switch assembly, and the magnification of the digital image data displayed on said display is reduced in response to an actuation of the second portion of said zoom switch assembly; and
panning means, attached to the rear of said housing adjacent said display, for panning through said digital image data to display a selected portion of said digital image data on said display.

2. The digital camera system according to Claim 1, wherein said panning means further includes:
a vertical panning switch assembly having a first portion for panning in a first vertical direction through the digital image data displayed on said display, and a second portion for panning in a second, opposing vertical direction through the digital image data displayed on said display.

3. The digital camera system according to claims 1 or 2, wherein said panning means further includes:
a horizontal panning switch assembly having a first portion for panning in a first horizontal direction through the digital image data displayed on said display, and a second portion for panning in a second, opposing horizontal direction through the digital image data displayed on said display.

4. The digital camera system according to any of claims 1-3, wherein said zoom switch assembly is located adjacent the first side of said display.

5. The digital camera system according to Claim 2, wherein said vertical panning switch assembly is located adjacent the first side of said display.

6. The digital camera system according to Claim 4, wherein said vertical panning switch assembly is located adjacent said zoom switch assembly.

7. The digital camera system according to Claim 3, wherein said horizontal panning switch assembly is located adjacent the bottom of said display.
